# EUROPÄISCHE PATENTSCHRIFT

(11) **EP 1 484 620 B1**
(45) Veröffentlichungstag und Bekanntmachung des Hinweises auf die Patenterteilung: **28.10.2009**
(21) Anmeldenummer: 04013376.1
(22) Anmeldetag: 07.06.2004
(51) Int. Cl.: G01S 13/93, G01S 15/93, G01S 7/41

(54) **Vorrichtung und Verfahren zum Erkennen des Konturverlaufes eines Hindernisses**
Apparatus and method for detecting the contour of an object
Procédé et dispositif pour détecter le contour d'un objet

(30) Priorität: 06.06.2003 DE 10325709
(43) Veröffentlichungstag der Anmeldung: 08.12.2004
(73) Patentinhaber: Valeo Schalter und Sensoren GmbH, 74321 Bietigheim-Bissingen (DE)
(72) Erfinder: Jecker, Nicolas, 73728 Esslingen (DE); Eckstein, Oliver, 71672 Marbach (DE); Gotzig, Heinrich Dr., 74081 Heilbronn (DE)

(56) Entgegenhaltungen:
- EP-A- 0 305 907
- EP-A- 0 735 383
- EP-A- 1 267 177
- GB-A- 2 319 420
- US-A1- 2003 058 132

## Beschreibung

Die Erfindung betrifft eine Vorrichtung für ein Fahrzeug zum Erkennen des Konturverlaufs eines Hindernisses in der Umgebung des Fahrzeugs, wenn das Fahrzeug an dem Hindernis vorbeifährt. Die Erfindung betrifft weiterhin ein ebenfalls dem Erkennen des Konturverlaufes eines Hindernisses dienenden Verfahren sowie ein Computerprogramm zur Durchführung dieses Verfahrens.

Aus der EP-A-1 267 177 und der EP 1 267 178 A1 sind jeweils ein Verfahren und eine Vorrichtung zur Lokalisierung von Objekten im Raum bekannt geworden, bei dem Laserstrahlen in Pulsen ausgesendet und die von den Objekten reflektierten Strahlenimpulse empfangen werden. Dabei werden zeitlich nacheinander eintreffende Empfangsechos ausgewertet.

Aus der GB-A-2 319 420 ist eine radarunterstützte Einparkhilfe eines Fahrzeugs bekannt geworden, mit der die Länge einer Parklücke bestimmbar ist.

Aus dem Stand der Technik, insbesondere aus der EP 0 305 907 A1 ist eine Einparkhilfevorrichtung für Kraftfahrzeuge mit einem an der Fahrzeugaußenseite angeordneten Sender/Empfänger bekannt. Der Sender strahlt ein Sendesignal zumindest annähernd senkrecht zur Bewegungsrichtung des Fahrzeugs in einem kleinen Winkelbereich aus. Trifft dieses Sendesignal auf ein Hindernis, insbesondere zwei beabstandet zueinander parkenden Fahrzeuge, die eine Parklücke begrenzen, so wird das Sendesignal von diesen parkenden Fahrzeugen reflektiert. Das auf diese Weise entstehende Reflexionssignal wird von einer Empfangseinrichtung empfangen und einer Auswerteeinrichtung in Form einer Vergleichseinrichtung zugeführt, welche das Reflexionssignal im Hinblick auf die Begrenzung der Parklücke durch die beiden parkenden Kraftfahrzeuge auswertet und die Größe der Parklücke aus dem Weg berechnet, den das Kraftfahrzeug beim Vorbeifahren an den beiden parkenden Fahrzeugen zurückgelegt hat, berechnet.

Der in der EP 0 305 907 A1 beschriebenen Einparkhilfsvorrichtung haftet der Nachteil an, dass die Begrenzungen der Parklücke durch die parkenden Fahrzeuge und damit auch die Länge der Parklücke durch Auswerten des empfangenen Reflexionssignals nur ungenau ermittelt werden können.

Ausgehend von diesem Stand der Technik ist es deshalb die Aufgabe der Erfindung, eine bekannte Vorrichtung sowie ein bekanntes Verfahren und ein bekanntes Computerprogramm zum Erkennen des Konturverlaufs eines Hindernisses derart weiterzubilden, dass eine genauere Bestimmung einer Begrenzung der Kontur des Hindernisses möglich ist.

Diese Aufgabe wird durch die in Patentanspruch 1 beanspruchte Vorrichtung gelöst. Genauer gesagt sieht die Lösung eine Vorrichtung für ein Fahrzeug zum Erkennen des Konturverlaufes eines Hindernisses in der Umgebung des Fahrzeugs vor, wenn das Fahrzeug an dem Hindernis vorbeifährt, wobei die Vorrichtung mindestens eine Sendeeinrichtung zum Aussenden eines Sendesignals auf das Hindernis, mindestens eine Empfangseinrichtung zum Empfangen von mindestens einem Reflexionssignal n mit n = 1-N pro ausgesandtem Sendesignal, wobei das Reflexionssignal das Sendesignal nach dessen Reflexion an dem Hindernis repräsentiert und eine Auswerteeinrichtung zum Auswerten des Reflexionssignals im Hinblick auf den Konturverlauf des Hindernisses aufweist und dadurch gekennzeichnet ist, dass die Empfangseinrichtung als Reflexionssignal mindestens ein Reflexionssignal höherer Ordnung empfängt, welches nicht das zeitlich erste, dem Sendesignal zugeordnete empfangene Reflexionssignal ist und die Sendeeinrichtung ausgebildet ist, eine Begrenzung der Kontur des Hindernisses quer zur Fahrtrichtung durch Auswerten des mindestens einen Reflexionssignals höherer Ordnung zu bestimmen.

Die beanspruchte Auswertung von mindestens einem Reflexionssignal höherer Ordnung zur Bestimmung der Begrenzung der Kontur eines Hindernisses quer zur Fahrtrichtung bietet gegenüber einer Auswertung des zeitlich zuerst empfangenen Reflexionssignals n = 1 den Vorteil, dass die Position der Begrenzung der Kontur des Hindernisses präziser und realitätsnäher erkannt werden kann. Das erste empfangene Reflexionssignal ist zwar in der Regel stärker als die zeitlich nachfolgend empfangenen Reflexionssignale höherer Ordnung, es ist aber nicht das stabilste. Insbesondere deswegen ist es gerade zur Bestimmung der Begrenzung des quer zur Fahrtrichtung verlaufenden Hindernisses nicht optimal geeignet.

Als besonders vorteilhaft für die Bestimmung der Position des in Fahrtrichtung gesehenen, und damit quer zur Fahrtrichtung verlaufenden Hindernisses hat sich die Verwendung des zweiten empfangenen Reflexionssignals herausgestellt.

Demgegenüber eignet sich das erste empfangene Reflexionssignal besonders gut für die Ermittlung des Verlaufs der Kontur des Hindernisses parallel zur Fahrtrichtung des Fahrzeugs. Für diesen Zweck ist das zweite empfangene Reflexionssignal weniger gut geeignet, weil es in dieser Hinsicht in der Regel zu instabil ist.

Weiterhin ist es vorteilhaft, wenn die Sendeeinrichtung ausgebildet ist, das Sendesignal in einem breiten Winkel, der Größe als ein vorgegebener Begrenzungswinkel ist, in die Umgebung des Fahrzeugs auszusenden. Auf diese Weise entstehen eine Vielzahl von Reflexionssignalen von jeweils ein und demselben Sendesignal, allerdings durch Reflexion an unterschiedlichen Punkten des Hindernisses. Die Vielzahl der dann zur Verfügung stehenden Reflexionssignale pro Sendesignal ermöglicht grundsätzlich eine genauere Bestimmung des Konturverlauf des Hindernisses.
Es ist weiterhin von Vorteil, wenn die Empfangseinrichtung eine Mehrzahl von N Reflexionssignalen pro Sendesignal innerhalb eines vorgegebenen Zeitfensters nach dem Aussenden des Sendesignals empfängt. Auf diese Weise kann die Auswertung der Reflexionssignale effektiver gestaltet werden, weil eine Auswertung von Reflexionssignalen, die später als ein durch das Zeitfenster definiertes Zeitintervall von der Empfangseinrichtung empfangen werden, in der Regel wenig aussagekräftig sind, weil sie zu schwach sind. Für die Auswertung dieser Signale braucht keine Kapazität der Vorrichtung und insbesondere der Auswerteeinrichtung verschwendet zu werden.

Die vorliegende Erfindung wird zur Bestimmung der Länge einer Parklücke verwendet, die von zwei beabstandet zueinander positionierten Hindernissen, insbesondere parkenden Fahrzeugen, gebildet ist. Mit Hilfe der Erfindung werden dann zunächst die beiden Begrenzungen der Parklücke sehr genau erfasst, um anschließend die Länge der Parklücke als Abstand zwischen den beiden Begrenzungen in Form eines von einem vorbeifahrenden Fahrzeugs zwischen den beiden Begrenzungen zurückgelegten Weges zu ermitteln.

Schließlich ist es vorteilhaft, wenn eine Person, insbesondere der Fahrer des Fahrzeugs, über den Verlauf der Kontur des Hindernisses in der Umgebung des Fahrzeugs und/oder über die Kontur und/oder die Länge der Parklücke mit Hilfe einer Ausgabeeinrichtung informiert wird.

Die oben definierte Aufgabe der Erfindung wird weiterhin durch ein Verfahren zum Erkennen des Konturverlaufes eines Hindernisses sowie durch ein Computerprogramm zur Durchführung dieses Verfahrens gelöst. Die Vorteile dieses Verfahrens und des Computerprogramms entsprechen den oben mit Bezug auf die Vorrichtung beschriebenen Vorteilen.

Weitere vorteilhafte Ausgestaltungen der Vorrichtung, des Verfahrens und des Computerprogramms sind Gegenstand der abhängigen Ansprüche.

In der Zeichnung zeigen:
- Figur 1: eine für die Anwendung der Erfindung typische Ausgangssituation;
- Figur 2: eine Vorrichtung gemäß der Erfindung;
- Figur 3: den Verlauf von Reflexionssignalen erster und zweiter Ordnung beim Vermessen eines Hindernisses; und
- Figur 4: den Verlauf von empfangenen Reflexionssignalen beim Vermessen einer Parklücke.

Die Erfindung wird nachfolgend detailliert anhand eines Ausführungsbeispiels unter Bezugnahme auf die der Beschreibung beigefügten Figuren beschrieben.

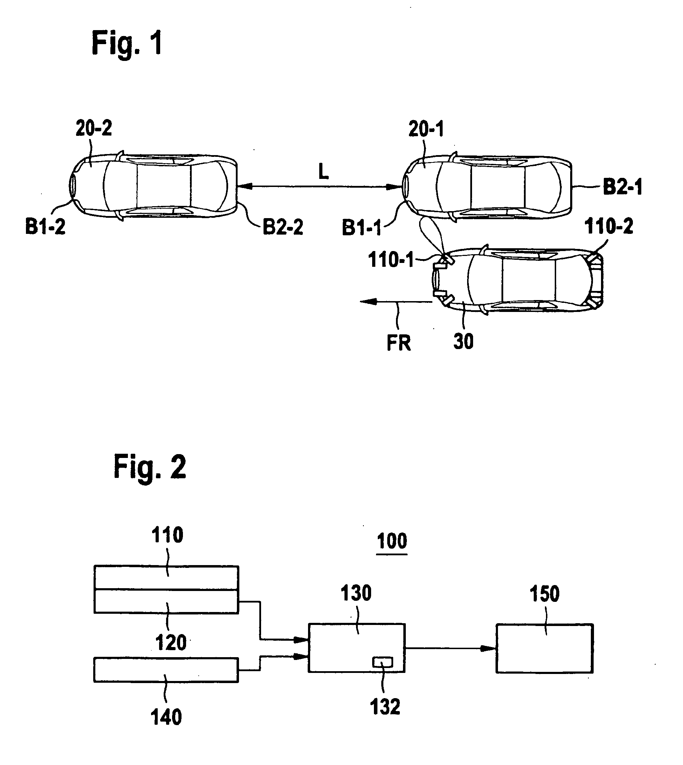

Figur 1 zeigt eine typische Situation für eine vorteilhafte Anwendung der Erfindung, nämlich die Vermessung eines ersten Hindernisses 20-1 und eines zweiten Hindernisses 20-2, jeweils in Form eines parkenden Fahrzeugs sowie die Berechnung der Länge L einer Parklücke in Form des Abstandes zwischen diesen beiden parkenden Fahrzeugen.

Für die Berechnung der Länge L der Parklücke wird zunächst der Konturverlauf des ersten Hindernisses 20-1 ermittelt. Dies erfolgt mit Hilfe einer erfindungsgemäßen Vorrichtung 100, wie sie in Figur 2 gezeigt ist, die vorzugsweise in einem an den beiden Hindernissen und der Parklücke vorbeifahrenden Fahrzeug 30 angeordnet ist. In Figur 2 ist der Aufbau der erfindungsgemäßen Vorrichtung für das Fahrzeug 30 zum Erkennen des Konturverlaufs eines Hindernisses 20-1, 20-2 in der Umgebung des Fahrzeugs zu erkennen. Die erfindungsgemäße Vorrichtung weist zunächst eine Sendeeinrichtung 110 zum Aussenden eines Sendesignals in Richtung auf das Hindernis 20-1, 20-2 in der Umgebung des Fahrzeugs 30 auf. Wenn mit dieser Sendeeinrichtung 110 Hindernisse 20-1, 20-2 im Seitenbereich des Fahrzeugs 30, insbesondere parkende Fahrzeuge beziehungsweise eine Parklücke erkannt werden sollen, dann ist die Sendeeinrichtung 110 vorteilhafterweise im Seitenbereich des Fahrzeugs 30 angeordnet. Für die erfindungsgemäße Detektion ist die Sendeeinrichtung als Ultraschallsensor ausgebildet.

Neben der Sendeeinrichtung 110 umfasst die erfindungsgemäße Vorrichtung weiterhin mindestens eine Empfangseinrichtung 120 zum Empfangen von mindestens einem Reflexionssignal pro ausgesandtem Sendesignal, wobei das Reflexionssignal das Sendesignal nach dessen Reflexion an dem Hindernis 20-1, 20-2 repräsentiert. Grundsätzlich ist die Empfangseinrichtung zum Empfang einer Mehrzahl von Reflexionssignalen n mit n = 1-N pro ausgesandtem Sendesignal ausgebildet. Dabei bezeichnet die Variable n die Reflexionssignale nach der zeitlichen Reihenfolge, mit welcher sie nach dem Aussenden des Sendesignals von der Empfangseinrichtung 120 vorzugsweise während eines vorgegebenen Zeitfensters empfangen werden. Das Zeitfenster wird vorzugsweise in Form eines Zeitschwellenwertes gebildet und überwacht. Genauer gesagt wird das erste empfangene Reflexionssignal mit n = 1 und die nachfolgend empfangenen Reflexionssignale, welche dasselbe Sendesignal repräsentieren, mit n ≥ 2 bezeichnet. Die Reflexionssignale n ≥ 2 werden nachfolgend auch als Reflexionssignale höherer Ordnung bezeichnet.

Weiterhin verfügt die erfindungsgemäße Vorrichtung 100 über eine Auswerteeinrichtung 130 zum Auswerten von mindestens einem Reflexionssignal im Hinblick auf den Konturverlauf des Hindernisses 20-1 oder 20-2.

In der in Figur 1 gezeigten Ausgangssituation zur Vermessung der Parklücke wird zunächst der Konturverlauf des ersten Hindernisses 20-1 erfindungsgemäß ermittelt. Dazu fährt das Fahrzeug 30 zunächst an dem ersten Hindernis 20-1 vorbei, wobei gleichzeitig die Sende- und Empfangseinrichtung 110, 120 sowie die Auswerteeinrichtung 130 aktiviert sind. Während der Vorbeifahrt sendet die Sendeeinrichtung 110 ein Sendesignal, welches vorzugsweise als Impulsfolge ausgebildet ist, auf das Hindernis 20-1. Die Impulsfrequenz und damit die Messfrequenz beträgt 50 Hz und die dadurch erreichte Messtiefe in die Umgebung cirka 2 m. An der Oberfläche des Hindernisses 20-1 wird das Sendesignal reflektiert, wobei aufgrund von Unebenheiten in der Oberfläche des Hindernisses 20-1 das in einem breiten Winkel ausgestrahlte Sendesignal an unterschiedlichen Punkten des Hindernisses 20-1, die jeweils eine andere Entfernung zu der Sendeeinrichtung 110 beziehungsweise zu der Empfangseinrichtung 120 haben können, reflektiert. Aufgrund dieser unterschiedlichen Entfernung erzeugen diese unterschiedlichen Punkte in der Oberfläche des Fahrzeuges 20-1 in der Regel mehrere Reflexionssignale pro ausgesandtem Sendesignal. Diese Reflexionssignale werden von der Empfangseinrichtung 120, die für die Anwendung gemäß Figur 1 vorzugsweise ebenfalls im Seitenbereich des Fahrzeugs 30 angeordnet ist, empfangen und nachfolgend einer Auswerteeinrichtung 130 zugeführt zum Auswerten des Reflexionssignals im Hinblick auf den Konturverlauf des Hindernisses 20-1.

Voraussetzung für eine exakte Berechnung der Länge L der Parklücke ist eine möglichst präzise Bestimmung der Position der Begrenzung der Hindernisse 20-1, 20-2, welche die Parklücke bilden.

Erfindungsgemäß wird vorgeschlagen, die Berechnung der Position dieser Begrenzung nicht auf Grundlage des zuerst empfangenen Reflexionssignal n = 1, sondern durch Auswerten von mindestens einem Reflexionssignal höherer Ordnung mit n ≥ 2, insbesondere mit n = 2, durchzuführen. Auf diese Weise kann die Begrenzung sehr exakt ermittelt werden.

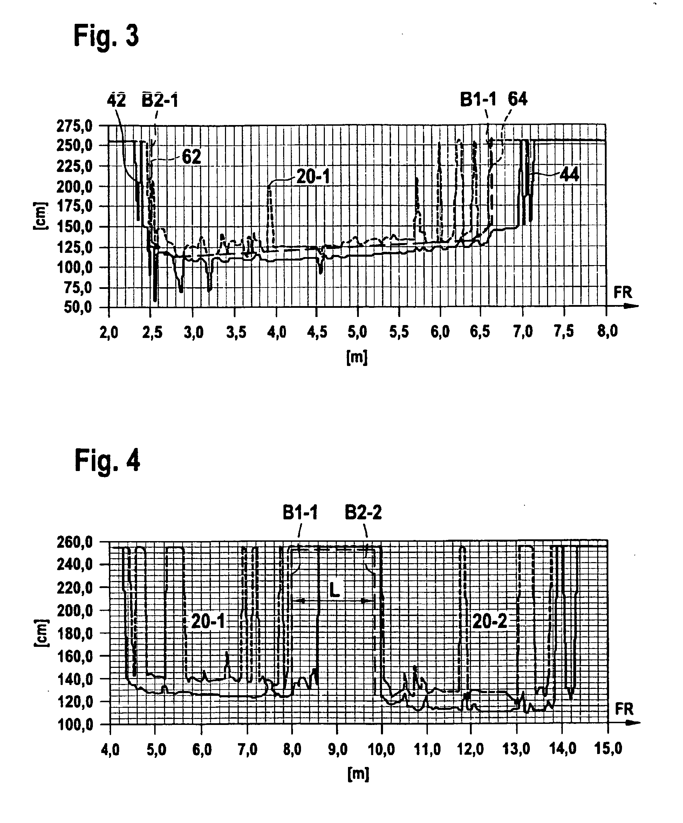

In Figur 3 sind die Signale, die beim Vermessenen eines Hindernisses empfangen werden, dargestellt. Die realen Abmessungen des Hindernisses, zum Beispiel 20-1 sind in Figur 3 durch eine gestrichelte schwarze Linie dargestellt.

Das erste empfangene Reflexionssignal n = 1 ist als durchgezogene schwarze Linie zu erkennen, während das zweite empfangene Reflexionssignal n = 2 als graue gestrichelte Linie dargestellt ist. Es ist zu erkennen, dass das erste empfangene Reflexionssignal die tatsächliche Kontur des Hindernisses nur recht ungenau insofern abbildet, als dass es insbesondere im

Bereich der Begrenzungsabschnitte einen relativ großen Abstand zu dem realen Konturverlauf zeigt. So könnte das erste empfangene Reflexionssignal n = 1 zum Beispiel zur Früherkennung der Existenz eines Hindernisses herangezogen werden, weil die Flanke 42 bereits lange vor der tatsächlichen Begrenzung B2-1 des Hindernisses 20-1 auftritt. Gleichermaßen würde sich das erste empfangene Reflexionssignal zur Späterkennung des Hindernisses eignen, weil die Flanke 44 des ersten Reflexionssignals erst wesentlich später als die in Fahrtrichtung FR gesehene, und damit quer zur Fahrtrichtung FR verlaufende, vordere Begrenzung B1-1 des Hindernisses 20-1 auftritt. Insofern ist also das erste empfangene Reflexionssignal n = 1 zur Bestimmung der tatsächlichen Begrenzungen B2-1, B1-1 des Hindernisses 20-1 weniger geeignet. Wesentlich besser geeignet für diese Aufgabe ist dagegen das zweite empfangene Reflexionssignal n = 2, weil dessen Flanken 62, 64 jeweils in Figur 3 wesentlich näher an der tatsächlichen Begrenzung B2-1, B1-1 des Hindernisses 20-1 liegen. Aus diesem Grunde wird erfindungsgemäß vorgeschlagen, die Berechnung der Position der Begrenzung eines in Fahrtrichtung FR gesehenen Hindernisses auf Basis von insbesondere dem zweiten empfangenen Reflexionssignal n = 2 durchzuführen.

Weiterhin ist in Figur 3 zu erkennen, dass das zweite empfangene Reflexionssignal für die Ermittlung des Konturverlaufes parallel zur Fahrtrichtung FR des an dem Hindernis 20-1 vorbeifahrenden Fahrzeugs 30 wenig geeignet ist, weil es in diesem Bereich, das heißt in Figur 3 im Bereich von 2,5 bis 6,5 m, zu instabil ist. Zur Ermittlung des Konturverlaufs in diesem Bereich eignet sich das erste empfangene Reflexionssignal besser, weil es in diesem Bereich stabiler verläuft; wie in Figur 3 zu erkennen ist. Es bietet sich deshalb an, den Konturverlauf eines Hindernisses 20-1, 20-2 stückweise, wie soeben beschrieben, auf Basis unterschiedlicher Reflexionssignale zu berechnen. Insbesondere sollte der Konturverlauf quer zur Fahrtrichtung FR des vorbeifahrenden Fahrzeugs 30, das heißt die Begrenzungen des Hindernisses in dieser Hinsicht auf Grundlage des zweiten empfangenen Reflexionssignals und der Konturverlauf parallel zur Fahrtrichtung auf Grundlage des ersten empfangenen Reflexionssignals ermittelt werden.

Figur 4 veranschaulicht die Berechnung der Länge L einer Parklücke. Dafür ist es neben der soeben beschriebenen Bestimmung der vorderen Begrenzung B1-1 des ersten Hindernisses 20-1 auch erforderlich, die hintere Begrenzung B2-2 des zweiten, die Parklücke bildenden Hindernisses 20-2 zu bestimmen. Dies erfolgt vorzugsweise in gleicher Weise, während das Fahrzeug 30 an der Parklücke und dem zweiten Hindernis 20-2 vorbeifährt. Sobald die Positionen der vorderen Begrenzung B1-1 des ersten Hindernisses 20-1 und die Position der hinteren Begrenzung B2-2 des zweiten Hindernisses 20-2 bekannt sind, kann die Auswerteeinrichtung 130 die Länge L der Parklücke als Abstand zwischen diesen beiden Begrenzungen ermitteln. Die Ermittlung des Abstandes erfolgt vorzugsweise so, dass der von dem Fahrzeug 30 während seiner Vorbeifahrt an der Parklücke zurückgelegte Weg zwischen den beiden Begrenzungen B1-1 und B2-2 mit Hilfe eines Weggebers 140 ermittelt wird. Dieser zurückgelegte Weg entspricht dann der Länge der Parklücke. Die Auswerteeinrichtung 130 kann weiterhin ausgebildet sein, die Länge der Parklücke L mit der Länge des Fahrzeugs 30 zu vergleichen, um aus dem Ergebnis dieses Vergleichs eine Einschätzung gewinnen zu können, ob ein Einparken des Fahrzeugs 30 in der Parklücke der Länge L überhaupt möglich ist oder nicht.

Schließlich kann der Auswerteeinrichtung 130 eine Ausgabeeinrichtung 150, siehe Figur 2, nachgeschaltet sein zum Informieren einer Person und insbesondere des Fahrers des Fahrzeugs 30 über den Konturverlauf von Hindernissen 20-1, 20-2 in der Umgebung des Fahrzeugs, insbesondere von parkenden Fahrzeugen und deren Position relativ zueinander und zu dem Fahrzeug 30. Auf diese Weise können dem Fahrer des Fahrzeugs 30 wertvolle Informationen über seine Umgebung und insbesondere über mögliche Parklücken zur Verfügung gestellt werden. Letzteres gilt insbesondere dann, wenn neben einer schematischen Anordnung der Hindernisse, die zum Beispiel auf einem Display im Blickfeld des Fahrers angezeigt werden kann, auch die ermittelte Länge L der Parklücke an den Fahrer übermittelt wird.

Der Schwierigkeitsgrad, mit welchem das Einparken des Fahrzeugs 30 in der Parklücke in Anbetracht des Verhältnisses von Länge L der Parklücke zu Länge des Fahrzeugs möglich ist, wird vorteilhafterweise über die als Diodenfeld ausgebildete Ausgabeeinrichtung 150 ausgegeben. Das Diodenfeld umfasst dabei mindestens eine rote Leuchtdiode, um dem Fahrer zu signalisieren, dass ein Einparken nicht möglich ist, mindestens eine gelbe Leuchtdiode, um dem Fahrer zu signalisieren, dass ein Einparken nur unter größeren Schwierigkeiten möglich ist und schließlich mindestens eine grüne Leuchtdiode, um dem Fahrer zu signalisieren, dass ein Einparken problemlos möglich ist.

Alternativ und/oder ergänzend zu einer optischen Ausbildung der Ausgabeeinrichtung 150 kann diese auch als akustischer Signalgeber ausgebildet sein. Mögliche unterschiedliche Schwierigkeitsgrade für das Einparken in die Parklücke werden dann beispielsweise in Form von unterschiedlichen akustischen Signalen angezeigt.

Das soeben beschriebene Verfahren zur Bestimmung der Begrenzung einer Kontur eines Hindernisses sowie zur Bestimmung einer Länge L einer Parklücke wird vorteilhafterweise in Form eines Computerprogramms realisiert. Dieses Computerprogramm kann gegebenenfalls zusammen mit weiteren Computerprogrammen auf einem computerlesbaren Datenträger 132 abgespeichert sein. Dabei kann es sich um eine Diskette, eine Compact Disc, einen sogenannten Flash-Memory oder dergleichen handeln. Das auf dem Datenträger abgespeicherte Computerprogramm kann dann als Produkt an einen Kunden verkauft werden.

Das Computerprogramm kann jedoch auch, wiederum gegebenenfalls zusammen mit weiteren Computerprogrammen, ohne die Zuhilfenahme eines Datenträgers über ein elektronisches Kommunikationsnetzwerk, insbesondere das Internet, an einen Kunden übertragen und auf diese Weise verkauft werden.

## Patentansprüche

1. Vorrichtung (100) für ein Fahrzeug (30) zum Erkennen des Konturverlaufs eines Hindernisses (20-1, 20-2) in der Umgebung des Fahrzeugs (30), wenn das Fahrzeug mit der Vorrichtung an dem Hindernis (20-1, 20-2) vorbeifährt, mit:
mindestens einer als Ultraschallsensor ausgebildeten Sendeeinrichtung (110) zum Aussenden eines Sendesignals auf das Hindernis (20-1, 20-2); mindestens einer Empfangseinrichtung (120) zum Empfangen von mindestens einem Reflexionssignal n mit n=1-N pro ausgesandtem Sendesignal, wobei das Reflexionssignal das Sendesignal nach dessen Reflexion an dem Hindernis (20-1, 20-2) repräsentiert; und einer Auswerteeinrichtung (130) zum Auswerten des Reflexionssignals im Hinblick auf den Konturverlauf des Hindernisses (20-1, 20-2); wobei die Auswerteeinrichtung (130) ausgebildet ist, die Länge (L) einer Parklücke zu bestimmen, die von zwei beabstandet zueinander positionierten Hindernissen (20-1, 20-2), insbesondere parkenden Fahrzeugen, gebildet ist, wenn das Fahrzeug (30) daran vorbeifährt, indem sie die in Fahrtrichtung (FR) vordere Begrenzung (B1) des ersten Hindernisses (20-1) und die hintere Begrenzung (B2) des zweiten Hindernisses (20-2) erfasst und die Länge (L) der Parklücke als Abstand zwischen den beiden Begrenzungen (B1, B2) in Form des von dem vorbeifahrenden Fahrzeugs (30) zwischen den beiden Begrenzungen zurückgelegten Weges ermittelt, und wobei
die Empfangseinrichtung (120) ausgebildet ist, das erste Reflexionssignal (n=1) zu empfangen; und die Auswerteeinrichtung (130) ausgebildet ist, das erste empfangene Reflexionssignal (n=1) im Hinblick auf den Verlauf der Kontur des Hindernisses parallel zur Fahrtrichtung (FR) des Fahrzeugs (30) auszuwerten.
**dadurch gekennzeichnet, dass**
die Empfangseinrichtung (120) als Reflexionssignal mindestens ein Reflexionssignal höherer Ordnung (n ≥ 2) empfängt, welches nicht das zeitlich erste (n=1) dem Sendesignal zugeordnete empfangene Reflexionssignal ist; und
die Auswerteeinrichtung (130) ausgebildet ist, eine Begrenzung (B1, B2) der Kontur des Hindernisses in Fahrtrichtung (FR) nicht auf Grundlage des zuerst empfangenen Reflexionssignals n=1 sondern durch Auswerten des mindestens einen Reflexionssignals höherer Ordnung (n ≥ 2) zu bestimmen und die Berechnung der Position der Begrenzung der Hindernisse (20-1, 20-2) durch Auswerten des mindestens einen Reflexionssignals höherer Ordnung (n ≥ 2) durchzuführen.

2. Vorrichtung nach Anspruch 1, **dadurch gekennzeichnet, dass** es sich bei dem Reflexionssignal um das Reflexionssignal zweiter Ordnung (n=2) handelt.

3. Vorrichtung nach einem der vorangegangenen Ansprüche, **dadurch gekennzeichnet, dass** die Sendeeinrichtung (110) ausgebildet ist, das Sendesignal in einem breiten Winkel, der größer als ein vorgegebener Begrenzungswinkel ist, in die Umgebung des Fahrzeugs (30) auszusenden.

4. Vorrichtung nach einem der vorangegangenen Ansprüche, **dadurch gekennzeichnet, dass** die Empfangseinrichtung (120) eine Mehrzahl von N Reflexionssignalen pro Sendesignal innerhalb eines vorgegebenen Zeitfensters nach dem Aussenden des Sendesignals empfängt.

5. Vorrichtung nach einem der vorangegangenen Ansprüche, **gekennzeichnet, durch** eine Ausgabeeinrichtung (150) zum insbesondere optischen Informieren einer Person über den Verlauf der Kontur des mindestens einen Hindernisses (20-1, 20-2) und/oder über die Kontur und/oder die Länge L der Parklücke.

6. Verfahren zum Erkennen des Konturverlaufs eines Hindernisses (20-1, 20-2) und um die Länge (L) einer Parklücke zu bestimmen, die von zwei beabstandet zueinander positionierten Hindernissen (20-1, 20-2), insbesondere parkenden Fahrzeugen, gebildet ist, wenn das Fahrzeug (30) daran vorbeifährt, umfassend die Schritte:
Aussenden eines Sendesignals mittels einer als Ultraschallsensor ausgebildeten Sendeeinrichtung (110) auf das Hindernis aus verschiedenen Positionen entlang einer Bewegungsrichtung (FR), die an dem Hindernis vorbeiführt;
Empfangen von mindestens einem Reflexionssignal n mit n=1-N pro Sendesignal, wobei das Reflexionssignal das Sendesignal nach dessen Reflexion an dem Hindernis repräsentiert;
Auswerten des empfangenen Reflexionssignals im Hinblick auf den Konturverlauf des Hindernisses (20-1, 20-2) und
Erfassung der in Fahrtrichtung (FR) vorderen Begrenzung (B1) des ersten Hindernisses (20-1) und der hintere Begrenzung (B2) des zweiten Hindernisses (20-2) und Ermittlung der Länge (L) der Parklücke als Abstand zwischen den beiden Begrenzungen (B1, B2) in Form des von dem vorbeifahrenden Fahrzeugs (30) zwischen den beiden Begrenzungen zurückgelegten Weges, wobei
der Verlauf der Kontur des Hindernisses parallel zur Bewegungsrichtung (FR) durch Auswerten des ersten empfangenen Reflexionssignal (n=1) erfolgt
**dadurch gekennzeichnet, dass**
als Reflexionssignal mindestens ein Reflexionssignal höherer Ordnung (n ≥ 2), insbesondere das Reflexionssignal zweiter Ordnung (n=2), empfangen wird, welches nicht das zeitlich erste (n=1) dem Sendesignal zugeordnete empfangene Reflexionssignal ist;
eine Bestimmung einer Begrenzung (B1, B2) der Kontur des Hindernisses in Bewegungsrichtung (FR) nicht auf Grundlage des zuerst empfangenen Reflexionssignals n=1 sondern durch Auswerten des mindestens einen Reflexionssignals höherer Ordnung erfolgt und
die Berechnung der Position der Begrenzung der Hindernisse (20-1, 20-2) durch Auswerten des mindestens einen Reflexionssignals höherer Ordnung (n ≥ 2) durchgeführt wird.

7. Verfahren nach einem Anspruch 6, **dadurch gekennzeichnet, dass** das Sendesignal in einem breiten Winkel, der größer als ein vorgegebener Begrenzungswinkel ist, in die Umgebung des Fahrzeugs (30) ausgesendet wird.

8. Verfahren nach einem der Ansprüche 6 oder 7, **dadurch gekennzeichnet, dass** der Empfang einer Mehrzahl von N Reflexionssignale pro ausgesandtem Sendesignal innerhalb eines vorgegebenen Zeitfensters nach dem Aussenden des Sendesignals erfolgt.

9. Computerprogramm mit Programmcode zum Erkennen des Konturverlaufs eines Hindernisses (20-1, 20-2) **dadurch gekennzeichnet, dass** der Programmcode ausgebildet ist, zur Durchführung des Verfahrens nach einem der Ansprüche 6 - 8.

10. Computerprogramm nach Anspruch 9, **dadurch gekennzeichnet, dass** der Programmcode auf einem computerlesbaren Datenträger (132) gespeichert ist.

## Claims

1. Apparatus (100) for a vehicle (30) for detecting the contour profile of an obstacle (20-1, 20-2) in the area surrounding the vehicle (30) when the vehicle containing the apparatus travels past the obstacle (20-1, 20-2), said apparatus having:
at least one transmitting device (110) which is in the form of an ultrasonic sensor and is intended to emit a transmission signal to the obstacle (20-1, 20-2);
at least one receiving device (120) for receiving at least one reflection signal n, where n=1-N, for each emitted transmission signal, the reflection signal representing the transmission signal after it has been reflected at the obstacle (20-1, 20-2); and
an evaluation device (130) for evaluating the reflection signal with regard to the contour profile of the obstacle (20-1, 20-2); the evaluation device (130) being designed to determine the length (L) of a parking space formed by two obstacles (20-1, 20-2) positioned at a distance from one another, in particular parked vehicles, when the vehicle (30) travels past it by detecting the boundary (B1) of the first obstacle (20-1), which boundary is at the front in the direction of travel (FR), and the rear boundary (B2) of the second obstacle (20-2) and determining the length (L) of the parking space as the distance between the two boundaries (B1, B2) in the form of the distance covered between the two boundaries by the vehicle (30) which is travelling past, and the receiving device (120) being designed to receive the first reflection signal (n=1); and the evaluation device (130) being designed to evaluate the first received reflection signal (n=1) with regard to the profile of the contour of the obstacle parallel to the direction of travel (FR) of the vehicle (30),
**characterized in that**
the receiving device (120) receives, as the reflection signal, at least one higher-order reflection signal (n ≥ 2) which is not the temporally first (n=1) received reflection signal associated with the transmission signal; and
the evaluation device (130) is designed to determine a boundary (B1, B2) of the contour of the obstacle in the direction of travel (FR) by evaluating the at least one higher-order reflection signal (n ≥ 2) rather than on the basis of the reflection signal n=1 which was received first and to calculate the position of the boundary of the obstacles (20-1, 20-2) by evaluating the at least one higher-order reflection signal (n ≥ 2).

2. Apparatus according to Claim 1, **characterized in that** the reflection signal is the second-order reflection signal (n=2).

3. Apparatus according to one of the preceding claims, **characterized in that** the transmitting device (110) is designed to emit the transmission signal into the area surrounding the vehicle (30) at a wide angle which is greater than a predefined limiting angle.

4. Apparatus according to one of the preceding claims, **characterized in that** the receiving device (120) receives a plurality of N reflection signals for each transmission signal inside a predefined time window following the emission of the transmission signal.

5. Apparatus according to one of the preceding claims, **characterized by** an output device (150) for informing a person of the profile of the contour of the at least one obstacle (20-1, 20-2) and/or of the contour and/or the length L of the parking space, in particular optically.

6. Method for detecting the contour profile of an obstacle (20-1, 20-2) in order to determine the length (L) of a parking space formed by two obstacles (20-1, 20-2) positioned at a distance from one another, in particular parked vehicles, when the vehicle (30) travels past it, said method comprising the following steps:
a transmitting device (110) in the form of an ultrasonic sensor is used to emit a transmission signal to the obstacle from different positions along a direction of movement (FR) which travels past the obstacle;
at least one reflection signal n, where n=1-N, is received for each transmission signal, the reflection signal representing the transmission signal after it has been reflected at the obstacle;
the received reflection signal is evaluated with regard to the contour profile of the obstacle (20-1, 20-2), and
the boundary (B1) of the first obstacle (20-1), which boundary is at the front in the direction of travel (FR), and the rear boundary (B2) of the second obstacle (20-2) are detected, and the length (L) of the parking space is determined as the distance between the two boundaries (B1, B2) in the form of the distance covered between the two boundaries by the vehicle (30) which is travelling past,
the profile of the contour of the obstacle being detected parallel to the direction of movement (FR) by evaluating the first received reflection signal (n=1),
**characterized in that**
at least one higher-order reflection signal (n ≥ 2), in particular the second-order reflection signal (n=2), which is not the temporally first (n=1) received reflection signal associated with the transmission signal is received as the reflection signal;
a boundary (B1, B2) of the contour of the obstacle in the direction of movement (FR) is determined by evaluating the at least one higher-order reflection signal rather than on the basis of the reflection signal n=1 which was received first, and
the position of the boundary of the obstacles (20-1, 20-2) is calculated by evaluating the at least one higher-order reflection signal (n ≥ 2).

7. Method according to Claim 6, **characterized in that** the transmission signal is emitted into the area surrounding the vehicle (30) at a wide angle which is greater than a predefined limiting angle.

8. Method according to either of Claims 6 and 7, **characterized in that** a plurality of N reflection signals are received for each emitted transmission signal inside a predefined time window following the emission of the transmission signal.

9. Computer program having program code for detecting the contour profile of an obstacle (20-1, 20-2), **characterized in that** the program code is designed to carry out the method according to one of Claims 6 - 8.

10. Computer program according to Claim 9, **characterized in that** the program code is stored on a computer-readable data storage medium (132).

## Revendications

1. Dispositif (100) prévu dans un véhicule (30) pour reconnaître le contour d'un obstacle (20-1, 20-2) présent dans l'environnement du véhicule (30) lorsque le véhicule doté du dispositif passe le long de l'obstacle (20-1, 20-2), et comprenant :
au moins un système émetteur (110) configuré comme sonde à ultrasons et émettant un signal d'émission sur l'obstacle (20-1, 20-2),
au moins un système récepteur (120) qui reçoit au moins un signal de réflexion n, n = 1-N pour chaque signal d'émission émis, le signal de réflexion représentant le signal d'émission après sa réflexion par l'obstacle (20-1, 20-2), et
un système d'évaluation (130) qui évalue le signal de réflexion en termes du contour de l'obstacle (20-1, 20-2),
le système d'évaluation (130) étant configuré pour déterminer la longueur (L) d'un emplacement de stationnement formé par deux obstacles (20-1, 20-2) situés à distance mutuelle, en particulier des véhicules en stationnement, lorsque le véhicule (30) passe le long d'eux, en déterminant la limite avant (B1) de l'obstacle (20-1) situé en avant dans la direction de déplacement (FR) et la limite arrière (B2) du deuxième obstacle (20-2) et en déterminant la longueur (L) de l'emplacement de stationnement comme distance entre les deux limites (B1, B2) sous la forme du chemin parcouru par le véhicule (30) entre les deux limites,
le système récepteur (120) étant configuré pour recevoir le premier signal de réflexion (n = 1) et
le système d'évaluation (130) étant configuré pour évaluer le premier signal de réflexion (n = 1) en termes du contour de l'obstacle parallèlement à la direction du déplacement (FR) du véhicule (30),
**caractérisé en ce que**
le système récepteur (120) reçoit comme signal de réflexion au moins un signal de réflexion d'ordre plus élevé (n ≥ 2) qui n'est pas le signal de réflexion (n = 1) associé au signal d'émission et reçu en premier et
**en ce que** le système d'évaluation (130) est configuré pour déterminer une limite (B1, B2) du contour de l'obstacle dans la direction de déplacement (FR) non pas selon la valeur du signal de réflexion n = 1 reçu en premier mais par évaluation du ou des signaux de réflexion d'ordre plus élevé (n ≥ 2) et pour effectuer le calcul de la position de la limite des obstacles (20-1, 20-2) par évaluation du ou des signaux de réflexion d'ordre plus élevé (n ≥ 2).

2. Dispositif selon la revendication 1**, caractérisé en ce que** le signal de réflexion est le signal de réflexion d'ordre deux (n = 2).

3. Dispositif selon l'une des revendications précédentes, **caractérisé en ce que** le système émetteur (110) est configuré pour émettre le signal d'émission dans l'environnement du véhicule (30) sous un angle plus large qu'un angle limite prédéterminé.

4. Dispositif selon l'une des revendications précédentes, **caractérisé en ce que** le système récepteur (120) reçoit N différents signaux de réflexion pour chaque signal d'émission à l'intérieur d'une fenêtre temporelle prédéterminée après l'émission du signal d'émission.

5. Dispositif selon l'une des revendications précédentes, **caractérisé en ce qu'**il présente un système d'introduction (150) qui, en particulier par voie optique, informe une personne sur le contour du ou des obstacles (20-1, 20-2) et/ou sur le contour et/ou la longueur (L) de l'emplacement de stationnement.

6. Procédé de reconnaissance du contour d'un obstacle (20-1, 20-2) pour déterminer la longueur (L) d'un emplacement de stationnement formé par deux obstacles (20-1, 20-2) situés à distance mutuelle, en particulier des véhicules en stationnement, lorsque le véhicule (30) passe le long d'eux, le procédé comportant les étapes qui consistent à :
au moyen d'un système émetteur (110) configuré comme sonde à ultrasons, émettre un signal d'émission sur l'obstacle depuis différentes positions situées dans une direction de déplacement (FR) qui longe l'obstacle,
pour chaque signal d'émission, recevoir au moins un signal de réflexion n, n = 1-N, le signal de réflexion représentant le signal d'émission après sa réflexion sur l'obstacle,
évaluer le signal de réflexion reçu en termes du contour de l'obstacle (20-1, 20-2),
déterminer la limite avant (B1) de l'obstacle (20-1) situé en avant dans la direction de déplacement (FR) et la limite arrière (B2) du deuxième obstacle (20-2) et déterminer la longueur (L) de l'emplacement de stationnement comme distance entre les deux limites (B1, B2) sous la forme du chemin parcouru par le véhicule (30) entre les deux limites,
le contour de l'obstacle parallèlement à la direction du déplacement (FR) du véhicule (30) étant déterminé par évaluation du premier signal de réflexion (n = 1),
**caractérisé en ce que**
au moins un signal de réflexion d'ordre plus élevé (n ≥ 2) qui n'est pas le signal de réflexion (n = 1) associé au signal d'émission et reçu en premier, en particulier le signal de réflexion d'ordre deux (n = 2), est reçu comme signal de réflexion et
**en ce qu'**une limite (B1, B2) du contour de l'obstacle dans la direction de déplacement (FR) est déterminée non pas à partir du signal de réflexion n = 1 reçu en premier mais par évaluation du ou des signaux de réflexion d'ordre plus élevé et **en ce que** le calcul de la position de la limite des obstacles (20-1, 20-2) est effectué par évaluation du ou des signaux de réflexion d'ordre plus élevé (n ≥ 2).

7. Procédé selon la revendication 6, **caractérisé en ce que** le signal d'émission est émis dans l'environnement du véhicule (30) sous un angle plus large qu'un angle limite prédéterminé.

8. Procédé selon l'une des revendications 6 ou 7, **caractérisé en ce que** N différents signaux de réflexion sont reçus pour chaque signal d'émission à l'intérieur d'une fenêtre temporelle prédéterminée après l'émission du signal d'émission.

9. Programme informatique doté d'un code de programme de reconnaissance du contour d'un obstacle (20-1, 20-2), **caractérisé en ce que** le code de programme est configuré pour exécuter le procédé selon l'une des revendications 6 à 8.

10. Programme informatique selon la revendication 9, **caractérisé en ce que** le code de programme est conservé sur un support de données (132) lisible par un ordinateur.
